# EUROPEAN PATENT APPLICATION

(11) **EP 2 174 831 A2**
(43) Date of publication of application: **14.04.2010**
(21) Application number: 09380155.3
(22) Date of filing: 02.10.2009
(51) Int. Cl.: B60P 3/36, B60P 3/32, B60P 3/39, B60P 3/38

(54) **Road vehicle**

(30) Priority: 08.10.2008 ES 200802065 U
(71) Applicant: Camacho Fernandez, Jose Ignacio, 48480 Arrigorriaga - Bizkaia (ES)
(72) Inventor: Camacho Fernandez, Jose Ignacio, 48480 Arrigorriaga - Bizkaia (ES)

(57) **Abstract**

Road vehicle, such a caravan or similar, consisting of a kitchen (1), a washroom/toilet (2), a living room (3), and a bedroom (4), in which the kitchen is configured independent and separated from the remaining parts of the vehicle (2, 3, 4), and the living room and the bedroom have a special layout of its parts.

## Description

### Field of the invention

The invention concerns to road vehicle, such as a caravan or similar, designed to solve the problems presented by current vehicles of this type, improving its usefulness and practicality.

The vehicle is configured so that the different zones comprising it are functional and they can be used in an independent way, without it affecting the use of the remaining areas.

In addition, such configuration requires fewer surfaces than vehicles of this type require for the same uses that take place inside, and for the same number of users, being this an advantage for its transport and its manageability.

### Background of the invention.

A large number of configurations of this type of vehicles are known, but in all of them the uses of the different zones are mixed or shared, causing inconvenience and disadvantages to the user, and needing more space than would be desirable as they are mobile vehicles.

The configurations of this type of vehicles that are know, do not solve the characteristic problems on this type of vehicles, such as smells and smoke when using the kitchen, nor the amount of space required for the user of the vehicle can comfortably develop common activities in it.

In the vehicles of the state of the art that are known, when using the kitchen, the rest of spaces such as living room and/or bedroom, are filled with smells and smoke, so, users usually install kitchen modules in the outside of the vehicle. This fact makes that the kitchen of the vehicle is underused and the user needs to make an extra effort in assembling an outdoor kitchen.

Another disadvantage in the state of the art is that for the same number of users, are required greater dimensions to develop activities such as living and bedroom. This bigger dimension of the vehicle makes it more difficult to transport and handle.

### Description of the invention.

Road vehicle such as a caravan or similar, with a kitchen-unit at one of the ends of the vehicle, configured as a defined and separated unit. It has an access door from the exterior, a door to the washroom, and a door to the living room. In that kitchen-unit are located typical items such as a countertop, fires, a sink, a refrigerator, a microwave and cabinets, at least.

This vehicle also has a living room to which you can access through one of the doors of the kitchen-unit, and it comprises a bench seat on one side which extends and becomes an auxiliary bed, a wardrobe on the opposite side, some retractable seats under the wardrobe, and a table in the middle.

This vehicle also has a bedroom to which you can access from the living room. In this bedroom in one of its sides, is comprised a marriage bed, and in its other side two berths, being the upper one folding onto the wall. This layout is susceptible of combinations to suit the needs of the user, and it may be installed only one double bed, or one double bed and one single bed, without varying the dimensions of the bedroom.

The vehicle of the invention shows therefore a new configuration in the layout of its components, with which you get three improvements in its use, which are the advantages that the invention has over the state of the art.

First, we manage to use the kitchen-unit independently from the rest of the rooms, avoiding smells and noisy sounds getting into the remaining spaces of the vehicle. In this way, we also improve its use as an outdoor kitchen, and we can use it without causing inconvenience to the users that may be using the areas of bedroom and living, and therefore we avoid installing a kitchen module on the outside of the vehicle.

Second, the living room configuration improves, on one hand, its usability, as its seats are arranged along one of its sides and not faced as in the case of the state of the art, thereby you have a better access to all the seats. On the other hand, by having retractable seats under the wardrobe, the number of users is greater than solutions of the state of the art for the same surface.

Finally, with the layout of the bedroom of the invention we achieve, that for the same number of users, the dimensions of the vehicle are smaller than those for vehicles of the state of the art with the same number of users. This is due to the structure of the bedroom, as it comprises a double bed, and two berths, being the upper one folding onto the wall, maximizing, in this way, the space available. This reduces the dimensions of the bedroom area and therefore of the vehicle, improving its manageability and its transportability.

### Brief description of drawings.

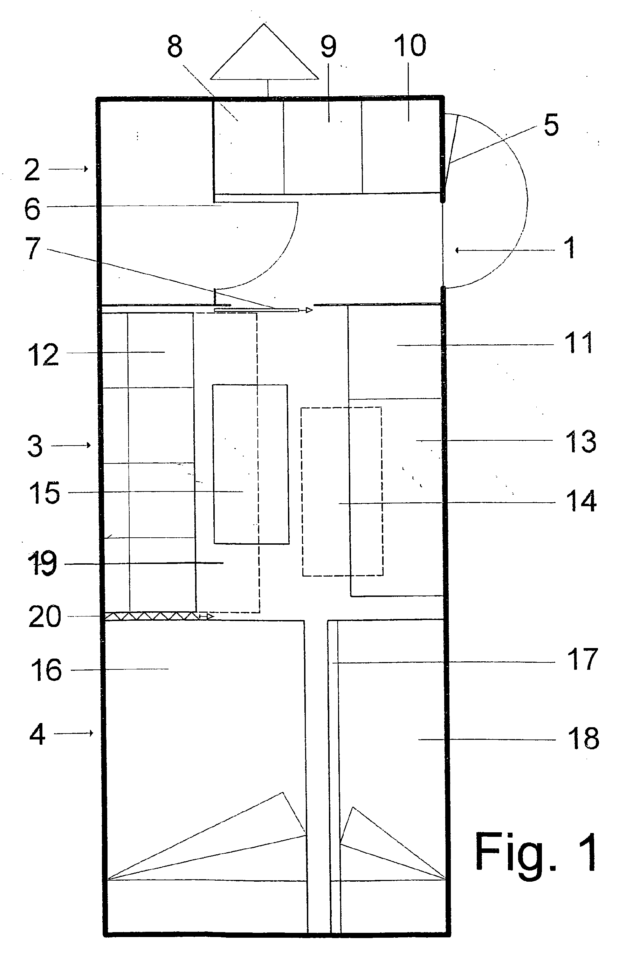

Figure 1 shows a floor-view of the vehicle, with the following elements:
   (1)Kitchen-unit
   (2)Washroom/toilette
   (3)Living room
   (4)Bedroom
   (5)Exterior door
   (6)Door from kitchen-unit to washroom
   (7)Door from kitchen-unit to living room
   (8)Countertop
   (9)Cooking fires
   (10)Sink
   (11)Refrigerator and microwave
   (12)Bench seat convertible in auxiliary bed
   (13)Wardrobe
   (14)Retractable seats under the wardrobe
   (15)Living table
   (16)Double bed
   (17)Lower berth
   (18)Upper berth
   (19)Auxiliary bed
   (20)Folding curtain

### Detailed description of a preferential way to carry out the invention.

The configuration of the road vehicle of the invention is made locating the kitchen-unit (1) at one of the ends of the vehicle. This kitchen-unit (1) is configured as a defined and closed unit, with an access door (5) from outside, a door (6) to the washroom, and a door (7) to the living room. Next to the kitchen-unit (1) it is placed the washroom (2) that is located at the same end of the vehicle where the kitchen-unit (1) is, to which you access through a door (7). In this kitchen-unit (1) is located a door (6) that gives access to the living room (3) and separates both rooms, allowing an independent use of the kitchen-unit and preventing smells and noises passing to the remaining parts of the vehicle. In the kitchen-unit (1) are located a countertop (8), some fires (9), a sink (10), and a refrigerator (11), at least.

The living room (3) comprises a bench seat (12) on one of its sides, a wardrobe (13) on the opposite side, a table (15), and some retractable seats (14) that are hidden under of the wardrobe (13). The bench seat (12) can be convertible in an auxiliary bed (19). In this way, we achieve a greater comfort of its use, and it allows to increase the number of users.

The bedroom (4) is located next to the living room (3) being both separated by a folding curtain (20). In this bedroom, on one of its sides, it is located a marriage bed (16) with its head at the end of the vehicle and two berths on the opposite side with their heads, also at the end of the vehicle. The lower berth (17) is fixed, and the upper berth (18) can be folded onto the wall to give breadth to the room when not using it. In this way, it reduces the space needed, and therefore the size of the vehicle, and so improves the mobility and manoeuvrability of the vehicle.

## Claims

1. Road vehicle consisting of a kitchen, a washroom/toilet, a bedroom and a living room between others, **characterized in that** the kitchen-unit (1) is configured independent and separated from the remaining parts of the vehicle.

2. Road vehicle as in claim 1, **characterized by** the layout of the parts forming the living room (3) which is comprised by a bench seat (12) on one of its sides, a wardrobe (13) on the opposite side, a table (15) in the middle, and some retractable seats (14) that are hidden under of the wardrobe (13).

3. Road vehicle as in claim 1, **characterized by** the layout of the parts forming the bedroom (4) which is comprised by a marriage bed (16) on one of its sides, and two berths on the opposite side, being the upper berth (18) folding onto the wall.
